(19) Europäisches Patentamt
European Patent Office
Office européen des brevets

(11) **EP 3 692 806 A1**

(12) **EUROPEAN PATENT APPLICATION**

(43) Date of publication:
**12.08.2020 Bulletin 2020/33**

(51) Int Cl.:
*A23L 2/58* (2006.01)  *A23L 2/84* (2006.01)
*A23L 29/231* (2016.01)  *A23L 29/256* (2016.01)
*A23L 2/02* (2006.01)

(21) Application number: **19156444.2**

(22) Date of filing: **11.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GNT Group B.V.**
**5730 AB Mierlo (NL)**

(72) Inventors:
• **MacDonald, Jane Lee**
 **5730 AB Mierlo (NL)**
• **Leeb, Elena**
 **5730 AB Mierlo (NL)**

(74) Representative: **Renkema, Jaap**
**IPecunia Patents B.V.**
**P.O. Box 593**
**6160 AN Geleen (NL)**

(54) **A COLORED BEVERAGE HAVING A NEUTRAL PH**

(57) A liquid foodstuff comprising
a. a spirulina-extract comprising phycocyanin,
b. at least one multi-sulphated carrageenan and/or pectin
c. a chelating agent
d. a solvent,
wherein the amount of multi-sulphated carrageenan and/or pectin is between 0.003 and 0.6 wt%,
wherein the weight ratio between multi-sulphated carrageenan and/or pectin and phycocyanin ranges between 1:1 and 100:1,
wherein the chelating agent is present between 1 - 2000 ppm,
wherein the solvent consists of water and optionally ethanol,
wherein the amount of solvent ranges between 60-99 wt%,
wherein the wt% are relative to the total weight of the liquid foodstuff.

Figure 1

EP 3 692 806 A1

**Description**

**FIELD OF THE INVENTION**

The present invention relates to a color stabilized liquid foodstuff containing a phycocyanin from spirulina-extract.

**STATE OF THE ART**

Beverages and colored beverages are known in the art. The use of natural food pigments over synthetic ones has increased in the food industry, due to increased consumer demands. While several natural pigments have been applied to low acid beverages, having a pH greater than 4.6, there is a need for a stable blue pigment which can be used on its own or blended with other pigments to deliver a range of colors including but not limited to green, purple, brown, and black.

US2018271119 discloses the use of phycocyanin derived from *Galdieria sulphuraria,* which is capable of growing at both high temperature and low pH, for use in beverages. The increased acid stability of phycocyanin (and allophycocyanin) extracted from *Galdieria sulphuaria* might be explained by the differences in the amino acid sequence in comparison to phycocyanin from commercially available spirulina (such as *Arthrospira platensis, Arthrospira maxima,* ect.). But *Galdieria sulphuraria* phycocyanin extracts have not yet been approved or undergone long term testing, as *Spirulina* derived phycocyanin has.

Selig, *et al.* discloses the use of beet-pectin to stabilize phycocyanin from a *Spirulina-extract* at pH 6.8 in an aqueous solution. Beet-pectin appears to be effective at pH 6.8, but is not stable upon thermal treatment, up to 120°C which is common in the food industry.

Dewi, *et al.* discloses a spirulina-extract encapsulated in κ-carrageenan for use in an aqueous solution.

Phycocyanin, from a *Spirulina-extract,* is to-date the only natural blue pigment approved by the US-FDA (FR Doc No: 2013-19550) and European Union as a coloring food. It is sold in liquid or in powder form for use as blue pigment in foods. Phycocyanin, however, has the disadvantage of being unstable in aqueous systems between pH 2.7-6 where protein aggregation occurs, and also instable under thermal treatment, leading to loss of color which limits the use of phycocyanin in low acid foodstuffs. Thus, phycocyanin has limited use for its food coloring properties in beverages, such as in for example non-alcoholic and alcoholic drinks, which have a pH greater than 4.6. Health conscious customers demand a wide range of naturally colored beverages, and phycocyanin is to-date the only available natural blue pigment. Hence, there is a need to stabilize phycocyanin when used in beverages which undergo thermal treatment or in cold filled alcoholic beverages.

**DISCLOSURE OF THE INVENTION**

The inventors have found a solution to stabilize the blue color, from a phycocyanin containing spirulina-extract, in liquid foodstuffs.

The present invention relates to a liquid foodstuff comprising

a. a spirulina-extract comprising phycocyanin,
b. at least one multi-sulphated carrageenan and/or pectin
c. a chelating agent
d. a solvent,
wherein the amount of multi-sulphated carrageenan and/or pectin is between 0.003 and 0.6 wt%,
wherein the weight ratio between multi-sulphated carrageenan or pectin and phycocyanin ranges between 1:1 and 100:1,
wherein the chelating agent is present between 1 - 2000 ppm,
wherein the solvent consists of water and optionally ethanol,
wherein the amount of solvent ranges between 60-99 wt%,
wherein the wt% are relative to the total weight of the liquid foodstuff.

The liquid foodstuff according to the invention has an increased color stability over the heating process as well as storage duration. The negative effects are aggregation/precipitation, color fading, color hue changes and lack of stability over time (weeks or months), as foodstuffs need to withstand long transport and varying storage conditions.

Advantages of the liquid foodstuff according to the invention are color stability and prevention of aggregation/precipitation; thereby enabling beverages to be naturally colored; for example, in blue and blue-based colors.

## DETAILED DESCRIPTION OF THE INVENTION

The liquid foodstuff of the invention contains multi-sulphated-carrageenan and/or pectin, a phycocyanin containing spirulina-extract and a chelator, preferably at a pH between 4.6 and 8.

The liquid foodstuff may further contain other components like for example sweeteners, stabilizers, chelating agents, acids, proteins, salts, flavors, vitamins, minerals, pigments, and preservatives.

The liquid foodstuff may have a blue color due to the phycocyanin content, but other colors based on blue may be obtained by way of mixing other pigments in with the liquid foodstuff. The liquid foodstuff may contain other pigments, such as safflomin (safflower), anthocyanin, carotenoid, betanin, annatto, lycopene, curcumin and chlorophyll. The pigments may be added to the blue colored phycocyanin containing liquid foodstuff to blend into other colors, such as for example green using safflomin.

The liquid foodstuff may contain additives and/or preservatives, such as salts, sorbic acid, salt of sorbate, benzoic acid, salt of benzoate, sodium hexametaphosphate, natamycin, nisin and sulfites.

The liquid foodstuff preferably has a solvent content of 60-99 wt%, more preferably between 75-98 wt%, most preferably between 83-97 wt%. The solvent consists of water and optionally ethanol (ethylalcohol). When ethanol is present typically, the liquid foodstuff contains between 0.1-20 wt%, preferably between 0.5-17 wt%, more preferably between 1-15 wt%, most preferably between 3-10 wt% ethanol.

The wt% is defined as the weight % of a component relative to the total weight of the liquid foodstuff, unless defined otherwise.

Preferably the liquid foodstuff is a beverage, such as a coconut water, alkaline water, coffee beverages, fruit or vegetable drink, smoothie, dairy beverage, dairy alternatives, nut milks, nutritional drink, and/or alcoholic beverage. The liquid foodstuff's color can be required to be stable over a long period of time (through transport and storage over weeks or months), at pH greater than 4.6. The color also needs to be stable after the liquid food product is subject to high temperature, up to 120 °C, as these temperatures are commonly used in the food industry in processes such as high temperature short time pasteurization to ensure food safety.

### Phycocyanin

The liquid foodstuff contains a phycocyanin containing spirulina-extract.

The phycocyanin containing spirulina-extract can be a water extract of for example *Arthrospira platensis* and *Arthrospira maxima.* Spirulina is a cyanobacteria that contains carbohydrates, lipids, fiber, minerals and amongst other proteins, phycobiliproteins. The phycobiliproteins comprise of C-phycocyanin and allophycocyanin. Phycocyanins exhibit the blue color of the liquid foodstuffs according to the present invention. The total phycocyanin content (which is the sum of the C-phycocyanin and allophycocyanin) in phycocyanin containing spirulina-extracts may vary by manufacturers and may typically range from 0.7-45.0 wt%. It is also possible to apply higher concentrations of phycocyanins. The phycocyanin containing spirulina-extract may also be known as Spirulina color concentrate, as for example EXBERRY® Shade Blue Powder. The phycocyanin containing spirulina-extract may be in liquid or dry (powder or granule) form and may contain diluents such as water, invert sugar, sucrose, and/or maltodextrin as example. For use in this invention, liquid and dry forms of phycocyanin containing spirulina-extract are applicable.

The liquid foodstuff preferably contains a dissolved phycocyanin from a spirulina-extract.

### Multi-sulphated carrageenan

The liquid foodstuff contains a multi-sulphated carrageenan or combination of multi-sulphated carrageenan.

The liquid foodstuff preferably contains dissolved multi-sulphated carrageenan. Carrageenans are viewed as dissolved, when an aqueous solution is clear to the eye, and does not show sediment or floating particulates.

Carrageenans are sourced from seaweed and they are large, highly flexible molecules that form curling helical structures. Carrageenans are characterized as linear polysaccharides with repeating galactose units. Carrageenans are classified by the degree of sulfonation. Examples of mono-sulphated carrageenans are κ-carrageenan, γ-carrageenan and α-carrageenan. Examples of di-sulphated carrageenans are ι-carrageenan, δ-carrageenan, μ-carrageenan and θ-carrageenan. Examples of tri-sulphated carrageenans are λ-carrageenan and ν-carrageenan.

The preferred multi-sulphated carrageenans of the invention are ι-carrageenan, δ-carrageenan, μ-carrageenan, θ-carrageenan, λ-carrageenan and ν-carrageenan; more preferred are ι-carrageenan and λ-carrageenan, and most preferred is λ-carrageenan. Mixtures of multi-sulphated carrageenans can also be used.

The multi-sulphated carrageenan content of the liquid foodstuff is between 0.003 - 0.6 wt%, preferably between 0.01 - 0.5 wt%, more preferably between 0.02 - 0.3 wt%, most preferably 0.03 - 0.2 wt%.

The dissolved multi-sulphated carrageenans and phycocyanin from a spirulina-extract are preferably present within the liquid foodstuff at a weight ratio between 1:1 - 100:1, preferably between 2:1 - 50:1, more preferably between 3:1 - 25:1, most preferably between 4:1 - 15:1.

Pectin

Instead of using a multi-sulphated carrageenan, it is also possible to apply pectin to stabilize the phycocyanin. Pectin is a heteropolysaccharide contained in the primary cell walls of plants. It is generally used as a stabilizer, gelling agent, or thickener in foodstuff. The use of pectin in combination with a chelator shows an unexpected synergistic effect of color stability upon heat treatment.

The pectin content of the liquid foodstuff is between 0.003 - 0.6 wt%, preferably between 0.01 - 0.5 wt%, more preferably between 0.02 - 0.3 wt%, most preferably 0.03 - 0.2 wt%.

The dissolved multi-sulphated carrageenans and/or pectin and phycocyanin from a spirulina-extract are preferably present within the liquid foodstuff at a weight ratio between 1:1 - 100:1, preferably between 2:1 - 50:1, more preferably between 3:1 - 25:1, most preferably between 4:1 - 15:1.

Color

The color performance is assessed using a spectrophotometer and measuring absorbance at 620, 650 and 750 nm. The standard method for phycocyanin determination was established by Yoshikawa & Belay (2008) to calculate the native phycocyanin content (mg/mL) from photometric measurements. It relies upon absorbance measurements at 620 and 650 nm and the extinction coefficients of C-phycocyanin and allophycocyanin at these wavelengths at pH 6.0.

The phycocyanin content in a spirulina-extract is calculated using Yoshikawa & Belay (2008) method at pH 6.0 which is listed below.

$$allophycocyanin\left(\frac{mg}{mL}\right)$$
$$= 0.180(Abs\ 650nm - Abs\ 750nm)$$
$$- 0.042(Abs\ 620nm - Abs\ 750nm)$$

$$C - phycocyanin\left(\frac{mg}{mL}\right)$$
$$= 0.162(Abs\ 620nm - Abs\ 750nm) - 0.098(Abs\ 650nm$$
$$- Abs\ 750nm)$$

$$Total\ Phycocyanin\left(\frac{mg}{mL}\right) = allophycocyanin\left(\frac{mg}{mL}\right) + C - phycocyanin\left(\frac{mg}{mL}\right)$$

To determine the amount of phycocyanin added to a liquid foodstuff, the dosage level of phycocyanin containing spirulina-extract is multiplied by the total phycocyanin content in the phycocyanin containing spirulina-extract.

The phycocyanin content of the liquid foodstuff is preferably between 0.003 - 0.07 wt%, preferably 0.006 - 0.05 wt%, and most preferably 0.008 - 0.04 wt%.

The challenge with phycocyanines is the stability during or after thermal treatment, which can lead to color loss and precipitation. Precipitation occurs in the pH range of 2.7 - 6.0 and for low acid foodstuff the critical range is between 4.6 - 6.0. Precipitation can be avoided when the pH is above 6.0 or delayed when the solution is in a gel or semi-solid form. The aggregation/precipitation is assessed visually. High absorbance at 750 nm after blending or thermal processing indicates a strong potential for protein aggregation. Preferably the pH of the beverage according to the invention is between 4.6 - 10, more preferably between 5 - 9, most preferably between 5.5 - 8.

Chelators

The liquid foodstuff contains at least one chelator, which may also be referred to as chelating agents.

Chelators are binding agents that influence the chemical and/or physical state of the molecules/atoms they bind by forming chelates. Chelators can improve color retention and have been found to work synergistically with the multi-sulphated carrageenans and pectin.

Chelating agents can be synthetic and natural compounds and include the group of ethylene diamine tetra acetic acid and/or its Na, K, Ca salts (EDTA), L-glutamic acid N,N-diacetic acid tetrasodium salt (GLDA), galactaric acid, sodium hexametaphosphate, glutathione, metallotheionein, 2,3-dimerapto-1-propanesulfonic acid, chlorella, garlic, cilantro, selenium, milk thistle, vitamin C, vitamin E, citrates, grape seed extract, quercetin, and lipoic acid.

The chelating agents are preferably selected from the group of ethylene diamine tetra acetic acid and/or its Na, K, Ca salts (EDTA), L-glutamic acid N,N-diacetic acid tetrasodium salt (GLDA) and galactaric acid. EDTA is considered to be ethylene diamine tetra acetic acid together with its Na, K, Ca salts, like for example calcium disodium ethylenediaminetetraacetate, disodium ethylenediaminetetraacetate, tetrasodium ethylenediaminetetraacetate, dipotassium ethylenediaminetetraacetate, and tripotassium ethylenediaminetetraacetate.

Calcium disodium ethylenediaminetetraacetate is abbreviated to CaNa2 EDTA, disodium ethylenediaminetetraacetate is abbreviated to Na2 EDTA, tetrasodium ethylenediaminetetraacetate is abbreviated to Na4 EDTA, dipotassium ethylenediaminetetraacetate is abbreviated to K2 EDTA, and tripotassium ethylenediaminetetraacetate is abbreviated to K3 EDTA.

The chelating agent is preferably present between 1 - 2000 ppm in the liquid foodstuff. 1 ppm of chelating agent is to be understood as 0.0001 wt%; for example, 30 ppm of EDTA are 0.003 wt%.

EDTA is preferably present between 1 - 100 ppm, preferably 10 - 50 ppm, most preferably 20 - 40 ppm.

The EDTA and phycocyanin from a spirulina-extract are preferably present within the liquid foodstuff at a weight ratio between 2:1 - 1:300, preferably between 1:1 - 1:25, most preferably 1:2 - 1:15.

The di- and tri-sulphated carrageenans and/or pectin in combination with a chelator such as EDTA showed a surprisingly high increase in color retention and extended shelf life after thermal treatment and/or in the presence of ethyl alcohol at neutral pH.

In an embodiment the liquid foodstuff is a beverage comprising between 0.003 - 0.6 wt% of A-carrageenan, between 0.003 - 0.07 wt% of phycocyanin from a spirulina-extract and a chelating agent, wherein the weight ratio of A-carrageenan to phycocyanin from a spirulina-extract is between 1:1 - 100:1. Preferably the chelating is EDTA. More preferably the chelating agent EDTA is present in an amount between 1 and 100 ppm.

In an embodiment the liquid foodstuff is a beverage comprising between 0.01 - 0.5 wt% of A-carrageenan, phycocyanin from a spirulina-extract and a chelating agent and wherein the weight ratio of A-carrageenan to phycocyanin from a spirulina-extract is between 2:1 - 50:1. Preferably the chelating agent is EDTA present in an amount from 10 - 50 ppm. Preferably the pH is between 4.6 - 10.

Process

Liquid foodstuffs are typically transported and stored before being consumed. To assure that these liquid foodstuffs do not spoil and are safe for consumption, thermal processes such as retort or UHT (Ultra High Temperature) are used for shelf stable low acid foodstuff. Pasteurization (73°C for 15 seconds) or High Pressure Processing (300 - 600 MPa) may be used for refrigerated short shelf life products (60 days). Liquid foodstuffs can also be preserved through water activity and alcohol content. Preservatives may be added for additional microbiological control.

A considerable blue color loss is observed upon UHT processing (137°C for 6 seconds) for low acid foodstuffs.

The di- and tri-sulphated carrageenans and/or pectin in combination with a chelator such as EDTA showed a surprisingly high increase in color retention and extended shelf life after thermal treatment and/or use of preservatives.

The liquid foodstuff can be obtained according to a process comprising the following steps:

a) Adding and dissolving the multi-sulphated carrageenans and/or pectin in water and mixing until the multi-sulphated carrageenans and/or pectin are dissolved, as determined by visual observation.
b) Adding the phycocyanin containing spirulina-extract, and mixing until dissolved;
c) Adding a chelating agent, such as EDTA;
d) Optionally adding a sweetener, flavor, vitamin, mineral, salt, buffer, juice, or other beverage components;
e) Optionally adding other pigments, such as anthocyanins;
f) Adding solvents to obtain the total volume, such as water and alcohol;
g) Treating the mixture of a)-f) by either thermally processing the liquid to at least 65 °C and filling it into a container; filling the liquid into a container and thermally processing the filled package to at least 100°C or no thermal treatment and cold filling into a container and controlling by formulation (alcohol or water activity), addition of preservatives or high pressure.

The phycocyanins, multi-sulphated carrageenans and/or pectin, and EDTA are preferably dissolved in the liquid feedstock. Dissolved means that the phycocyanins, carrageenans and/or pectin, and EDTA stay in the solution. The solution is clear to the eye and no sediment or floating particles are observed.
Multi-sulphated carrageenan and/or pectin can be dry blended with a non-acidic carbohydrate such as sucrose or maltodextrin to improve dissolution of the multi-sulphated carrageenan.

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

The invention is now elucidated by way of the following examples, without however being limited thereto.

## REFERENCES

Buchweitz, M. (2016). 17 - Natural Solutions for Blue Colors in Food. In R. Carle, & R. M. Schweiggert (Eds.), Handbook on Natural Pigments in Food and Beverages (pp. 355-384): Woodhead Publishing.

Dewi, E. N. et al. 2017, "Physical characteristics of phycocyanin from Spirulina microcapsules using different coating materials with freeze drying method", IOP Conf. Ser.: Earth Environ. Sci. 55.

Selig, M.J., et al., (2017), "Protection of blue color in a spirulina derived phycocyanin extract from proteolytic and thermal degradation via complexation with beet-pectin", Food Hydrocolloids.

Yoshikawa & Belay (2008) Yoshikawa, N., & Belay, A. (2008). Single-Laboratory Validation of a Method for the Determination of c-Phycocyanin and Allophycocyanin in Spirulina (Arthrospira) Supplements and Raw Materials by Spectrophotometry. Journal of AOAC International, 91, 524-529.

## DESCRIPTION OF THE FIGURES

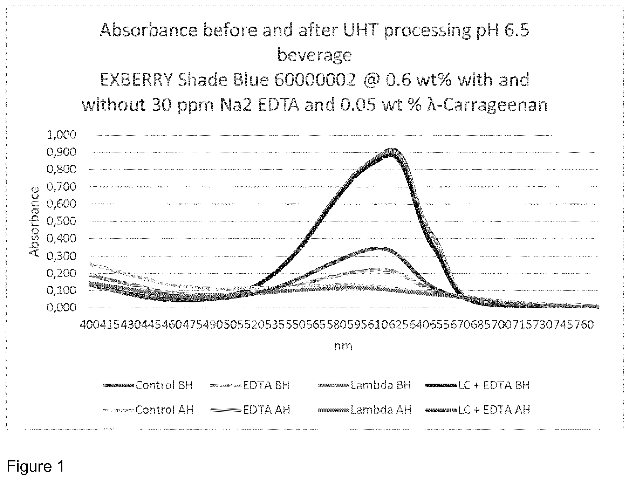

Figure 1: Absorbance spectra of aqueous liquid foodstuff at pH 6.5 before and after UHT processing (135 °C for 6 seconds) with and without A-carrageenan and EDTA. The combination of A-carrageenan with Na2 EDTA had the best color retention post thermal processing.

## EXAMPLES

Experiment 1

Experiment 1.1

Various hydrocolloids were investigated to determine which ones prevented phycocyanin aggregation in an aqueous solution near the isoelectric point of spirulina proteins, ~ pH 4.0. Seven hydrocolloids were tested at a dosage level of 0.05 wt% in a 7 wt% sucrose solution at pH 4.0 with EXBERRY® Shade Blue Powder 60000002 phycocyanin containing spirulina-extract at 0.5 wt% (equating to 0.012 wt% phycocyanin). The beverage solution was thermally processed to 85°C (microwave) and filled hot into PET bottles and cooled in a water bath to less than 35 °C.

Spirulina aggregation occurred in control, K-carrageenan, and guar gum. No precipitation occurred in lambda carrageenan, iota carrageenan, pectin, xanthan, and gum acacia. (see table 1).

Table 1: Aggregation of spirulina proteins in aqueous solution after thermal processing at pH 4

| Control | λ-carrageenan | I-carrageenan | K-carrageenan | Pectin | Xanthan | Gum Acacia | Guar Gum |
|---|---|---|---|---|---|---|---|
| Yes | No | No | Yes | No | No | No | Yes |

Experiment 1.2

To expand upon learnings in experiment 1.1, six hydrocolloids were tested at a dosage level of 0.05 wt% in a 7 wt% sucrose solution at pH 6.5 with EXBERRY® Shade Blue Powder 60000002 at 0.5 wt% to determine if color retention is improved. Trisodium citrate or citric acid was added to the final solution to adjust the pH to 6.5. The beverages were processed to 135°C for 6 seconds and filled at ambient temperature into sterile bottles as the product is low acid and the higher temperatures are needed to control for pathogens.

Total phycocyanin content was determined before and after processing. The Yoshikawa & Belay (2008) method was modified and instead of diluting the sample to adjust pH to 6.0, the solution was measured as is at pH 6.5.

No aggregation or precipitation was observed after thermal processing at pH 6.5, however, color loss was significant >85% after thermal processing for the control sample (no hydrocolloid) and all six hydrocolloids. In experiment 1.2 no chelating agents were present.

**Fout! Verwijzingsbron niet gevonden**.2 shows the total phycocyanin content of the control sample and with the addition of 6 different hydrocolloids before and after processing and whether any precipitation was observed.

Table 2: Precipitation and total phycocyanin (PC) before and after UHT thermal processing at pH 6.5.

| | Total PC (mg/mL) Before Heat | Total PC (mg/mL) After Heat | % Loss after heating | Precipitation |
|---|---|---|---|---|
| **Control** | 0.117 | 0.016 | 86% | No |
| **Λ-carrageenan** | 0.114 | 0.016 | 86% | No |
| **I- Carrageenan** | 0.116 | 0.015 | 87% | No |
| **K-Carrageenan** | 0.118 | 0.017 | 86% | No |
| **Xanthan Gum** | 0.117 | 0.017 | 86% | No |
| **Gum Arabic** | 0.118 | 0.017 | 86% | No |
| **Pectin** | 0.116 | 0.017 | 86% | No |

Experiment 1.3

As the hydrocolloids on their own had no impact to color retention during thermal processing and protein aggregation is not a concern above a pH of 6.0, an experiment was conducted to determine the influence of a chelator, in particular Na2 EDTA at 30 ppm on its own and in combination with the same six hydrocolloids in experiment 1.2.

Aqueous solutions were prepared containing 7 wt% sucrose solution, EXBERRY® Shade Blue Powder 60000002 at 0.5 wt%, Na2 EDTA at 30 ppm, and six hydrocolloids at a dosage level of 0.05 wt%. Trisodium citrate or citric acid was added to the final solution to reach a pH of 6.5. The beverages were processed to 135°C for 6 seconds and filled at ambient temperature into sterile bottles as the product is low acid and the higher temperatures are needed to control for pathogens.

Total phycocyanin content was determined before and after processing and through 6 weeks in accelerated storage at 32 °C in a hotbox. The Yoshikawa & Belay (2008) method was modified as solution were measured at pH 6.5 vs. 6.0.

No aggregation or precipitation was observed after thermal processing at pH 6.5. The combination of Na2 EDTA with A-carrageenan, ι-carrageenan, and pectin had the best color retention post processing and through six weeks of storage at 32 °C. The color of the beverage after thermal processing and through six weeks of storage remained blue for the Na2 EDTA with A-carrageenan, ι-carrageenan, and pectin samples.

Surprisingly, the color rretention of EDTA with xanthan, gum arabic, and κ-carrageenan was worse than EDTA alone and the color was greenish blue.

**Fout! Verwijzingsbron niet gevonden**.3 shows the total phycocyanin content for the control sample (no hydrocolloid or Na2 EDTA), the addition of Na2 EDTA at 30 ppm, and six hydrocolloids at 0.05 wt% with 30 ppm Na2 EDTA before and after processing and through six weeks of accelerated storage at 32°C.

Table 3: Total phycocyanin (PC) content before and after UHT thermal processing at pH 6.5 and through 6 weeks at 32 °C storage.

| | Total PC (mg/mL) Before Heat | Total PC (mg/mL) After Heat | % Loss after heating | Total PC (mg/mL) 3wk (32°C) | Total PC (mg/mL) 6 wk (32°C) | % improvement vs. Control |
|---|---|---|---|---|---|---|
| **Control** | 0.117 | 0.016 | 86% | 0.012 | 0.010 | |

(continued)

| | Total PC (mg/mL) Before Heat | Total PC (mg/mL) After Heat | % Loss after heating | Total PC (mg/mL) 3wk (32°C) | Total PC (mg/mL) 6 wk (32°C) | % improvement vs. Control |
|---|---|---|---|---|---|---|
| Na2 EDTA | 0.118 | 0.034 | 71% | 0.028 | 0.024 | 140% |
| A-carrageenan + Na2 EDTA | 0.115 | 0.046 | 60% | 0.035 | 0.029 | 190% |
| ι-carrageenan + Na2 EDTA | 0.118 | 0.040 | 66% | 0.029 | 0.025 | 150% |
| κ-carrageenan + Na2 EDTA | 0.118 | 0.033 | 72% | 0.026 | 0.017 | 70% |
| Xanthan Gum + Na2 EDTA | 0.120 | 0.029 | 76% | 0.018 | 0.016 | 60% |
| Gum Arabic + Na2 EDTA | 0.118 | 0.032 | 73% | 0.024 | 0.021 | 110% |
| Pectin + Na2 EDTA | 0.116 | 0.042 | 64% | 0.031 | 0.026 | 160% |

Experiment 1.4

To confirm findings from experiment 1.3, a follow-up experiment was conducted with EXBERRY® Shade Blue Powder 60000002 at 0.6 wt% and sucrose at 7 wt % at pH 6.5 with combinations of Na2 EDTA at 30 ppm and Ticaloid® 750 A-carrageenan (TIC GUMS) at 0.05 wt%. The solutions were analyzed by photometer before and after UHT processing (135°C) and at week 3 and 6 in 32°C hotbox storage. A total of four beverages were tested: control, A-carrageenan, Na2 EDTA, and A-carrageenan with Na2 EDTA at pH 6.5.

The results (see table 4) confirm that A-carrageenan on its own will not improve phycocyanin color stability at neutral pH. Almost all the phycocyanin blue color in the control and A-carrageenan samples were destroyed during thermal processing and the resulting color was grey. While A-carrageenan on its own did not improve color retention, the combination of A-carrageenan with Na2 EDTA was the best performing sample after thermal processing and through 6 weeks storage at 32°C. The total phycocyanin content of the Na2 EDTA and carrageenan sample was 134% higher than control sample (see **Fout! Verwijzingsbron niet gevonden**.). Na2 EDTA only sample was also significantly better than control with a 77% improvement in total phycocyanin content over control.

Figure 1 shows the change in absorbance before and after thermal processing of the four solutions tested.

Table 4: Total Phycocyanin Content through 6 weeks 32 °C storage of UHT processed pH 6.5 beverage solutions

| | Total Phycocyanin (mg/mL) | | | | % Improvement from Control |
|---|---|---|---|---|---|
| | Before Heat | After Heat | Week 3 | Week 6 | |
| Control | 0.143 | 0.017 | 0.020 | 0.014 | |
| Na2 EDTA | 0.140 | 0.032 | 0.024 | 0.024 | 77% |
| λ-carrageenan | 0.136 | 0.017 | 0.014 | 0.011 | -22% |
| λ-carrageenan + Na2 EDTA | 0.133 | 0.047 | 0.037 | **0.032** | 134% |

Experiment 2

An experiment was conducted with EXBERRY® Shade Blue Powder 60000002 at 0.5 wt%, 7 wt% sucrose, and 15 wt% ethylalcohol. Na2 EDTA at 30 ppm and/or Ticaloid® 750 (TIC GUMS) A-carrageenan at 0.05 wt% was added to determine if phycocyanin containing spirulina concentrate can be stabilized in alcohol containing beverages. The pH of the solutions were measured and the results were between 7 - 9. No acids or buffers were added to the solutions as pH measurements of alcohol containing solutions are not accurate.

All formulas were cold filled and the order of addition was as follows:

1) Dry blend A-carrageenan with sugar and add to 50 wt% of total water (room temperature). Mix until fully hydrated (if used).

2) Add phycocyanin containing spirulina concentrate and mix until dissolved.

3) Add Na2 EDTA (if used).

4) Add remaining water and alcohol.

The alcohol containing beverages were analyzed by photometer within 2 hours (T0) after batching and after 3 and 6 weeks of accelerated storage at 32 °C.

Photometric measurements at T0, 3 weeks and 6 weeks are in Table . The results show that spirulina is stabilized by Na2 EDTA and A-carrageenan with Na2 EDTA.

Table 5: Color Stability of Phycocyanin Containing Spirulina-Extract in 15wt% Alcohol after 6 weeks at 32°C

| Total Phycocyanin (mg/mL) content in 15wt% Alcohol Beverage through 6 weeks @ 32 °C | | | | |
|---|---|---|---|---|
| 7wt% Sucrose and 0.5wt% EXBERRY® Shade Blue Powder 60000002 | | | | |
| | Total Phycocyanin (mg/mL) | | | |
| | T0 | 3 weeks | 6 weeks | % Loss |
| 15% ETOH Control | 0.092 | 0.032 | 0.024 | 74% |
| 15% ETOH A-carrageenan 0.05wt% | 0.090 | 0.032 | 0.023 | 74% |
| 15% ETOH Na2 EDTA 30 ppm | 0.094 | 0.052 | 0.044 | 53% |
| 15% ETOH A-carrageenan+ Na2 EDTA | 0.092 | 0.051 | 0.043 | 54% |

**Claims**

1. A liquid foodstuff comprising

   a. a spirulina-extract comprising phycocyanin
   b. at least one multi-sulphated carrageenan and/or pectin
   c. a chelating agent
   d. a solvent,

      i. wherein the amount of multi-sulphated carrageenan and/or pectin is between 0.003 and 0.6 wt%,
      ii. wherein the weight ratio between multi-sulphated carrageenan and/or pectin and phycocyanin ranges between 1:1 and 100:1,
      iii. wherein the chelating agent is present between 1 - 2000 ppm,
      iv. wherein the solvent consists of water and optionally ethanol,
      v. wherein the amount of solvent ranges between 60-99 wt%,
      vi. wherein the wt% are relative to the total weight of the liquid foodstuff.

2. The liquid foodstuff according to claim 1, wherein the solvent content is between 75-98 wt%, most preferably between 83-97 wt%.

3. The liquid foodstuff according to claim 1 or 2, wherein the solvent consists of water and optionally ethanol (ethylalcohol).

4. The liquid foodstuff according to any one of claims 1-3, wherein the foodstuff contains between 0.1-20 wt%, preferably between 0.5-17 wt%, more preferably between 1-15 wt%, most preferably between 3-10 wt% ethanol.

5. The liquid foodstuff according to any one of claims 1-4, wherein the multi-sulphated carrageenans of the invention are selected from ι-carrageenan, δ-carrageenan, μ-carrageenan, θ-carrageenan, A-carrageenan and v-carrageenan; more preferred are ι-carrageenan and A-carrageenan, and most preferred is λ-carrageenan.

6. The liquid foodstuff according to any one of claims 1-5, wherein the multi-sulphated carrageenan content of the liquid foodstuff is between 0.003 - 0.6 wt%, preferably between 0.01 - 0.5 wt%, more preferably between 0.02 - 0.3 wt%, most preferably 0.03 - 0.2 wt%.

7. The liquid foodstuff according to any one of claims 1-6, wherein the pectin content of the liquid foodstuff is between 0.003 - 0.6 wt%, preferably between 0.01 - 0.5 wt%, more preferably between 0.02 - 0.3 wt%, most preferably 0.03 - 0.2 wt%.

8. The liquid foodstuff according to any one of claims 1-7, wherein the phycocyanin content is between 0.003 - 0.07 wt%, preferably 0.006 - 0.05 wt%, and most preferably 0.008 - 0.04 wt%.

9. The liquid foodstuff according to any one of claims 1-8, wherein the dissolved multi-sulphated carrageenans and/or pectin and phycocyanin from a spirulina-extract are preferably present within the liquid foodstuff at a weight ratio between 2:1 - 50:1, more preferably between 3:1 - 25:1, most preferably between 4:1 - 15:1.

10. The liquid foodstuff according to any one of claims 1-9, wherein the chelating agent is selected from the group of ethylene diamine tetra acetic acid and/or its Na, K, Ca salts (EDTA), L-glutamic acid N,N-diacetic acid tetrasodium salt (GLDA) and galactaric acid.

11. The liquid foodstuff according to any one of claims 1-10, wherein the chelating agent is EDTA, which is preferably present between 1 - 100 ppm, preferably 10 - 50 ppm, most preferably 20 - 40 ppm.

12. The liquid foodstuff according to any one of claims 1-11, wherein EDTA and phycocyanin from a spirulina-extract are preferably present within the liquid foodstuff at a weight ratio between 2:1 - 1:300, preferably between 1:1 - 1:25, most preferably 1:2 - 1:15.

13. Process for preparing the liquid foodstuff according to anyone of claims 1-12, wherein the process comprises the steps:

a. Adding and dissolving the multi-sulphated carrageenans and/or pectin in water and mixing until the multi-sulphated carrageenans and/or pectin are dissolved, as determined by visual observation.
b. Adding the phycocyanin containing spirulina-extract, and mixing until dissolved;
c. Adding a chelating agent, such as for example EDTA;
d. Optionally adding a sweetener, flavor, vitamin, mineral, salt, buffer, juice, or other beverage components;
e. Optionally adding other pigments, such as anthocyanins;
f. Adding solvents to obtain the total volume, such as water and alcohol;
g. Treating the mixture of a)-f) by either thermally processing the liquid to at least 65 °C and filling it into a container; filling the liquid into a container and thermally processing the filled package to at least 100°C or no thermal treatment and cold filling into a container and controlling by formulation (alcohol or water activity) addition of preservatives or high pressure.

Figure 1

Europäisches
Patentamt

European
Patent Office

Office européen
des brevets

# EUROPEAN SEARCH REPORT

Application Number

EP 19 15 6444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SELIG MICHAEL J ET AL: "Protection of blue color in a spirulina derived phycocyanin extract from proteolytic and thermal degradation via complexation with beet-pectin", FOOD HYDROCOLLOIDS, ELSEVIER BV, NL, vol. 74, 28 July 2017 (2017-07-28), pages 46-52, XP085202093, ISSN: 0268-005X, DOI: 10.1016/J.FOODHYD.2017.07.027 * the whole document * | 1-13 | INV. A23L2/58 A23L2/84 A23L29/231 A23L29/256 A23L2/02 |
| A | WO 2018/134390 A1 (ADM WILD EUROPE GMBH & CO KG [DE]) 26 July 2018 (2018-07-26) * claims 1-14; examples 1-3 * | 1-13 | |
| A,D | EKO NURCAHYA ET AL: "Physical Properties of Spirulina Phycocyanin Microencapsulated with Maltodextrin and Carrageenan INTRODUCTION", PHILIPPINE JOURNAL OF SCIENCE, vol. 147, 1 June 2018 (2018-06-01), pages 201-207, XP055604231, * abstract * | 1-13 | |
| A | RATANA CHAIKLAHAN ET AL: "Stability of phycocyanin extracted from Spirulina sp.: Influence of temperature, pH and preservatives", PROCESS BIOCHEMISTRY, vol. 47, no. 4, 1 April 2012 (2012-04-01), pages 659-664, XP055556951, GB ISSN: 1359-5113, DOI: 10.1016/j.procbio.2012.01.010 * page 660, column 2 - page 664 * | 1-13 | TECHNICAL FIELDS SEARCHED (IPC) A23L |

-/--

The present search report has been drawn up for all claims

| Place of search | Date of completion of the search | Examiner |
|---|---|---|
| The Hague | 12 July 2019 | De Jong, Ellen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 19 15 6444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GIULIA MARTELLI ET AL: "Thermal stability improvement of blue colorant C-Phycocyanin from Spirulina platensis for food industry applications", PROCESS BIOCHEMISTRY, vol. 49, no. 1, 1 January 2014 (2014-01-01), pages 154-159, XP055604613, GB ISSN: 1359-5113, DOI: 10.1016/j.procbio.2013.10.008 * the whole document * | 1-13 | |
| A | US 2011/070336 A1 (MUTILANGI WILLIAM [US] ET AL) 24 March 2011 (2011-03-24) * paragraphs [0017], [0027], [0028], [0036], [0040]; claims 3-24; examples 1-3 * | 1-13 | |
| A | PRAJAPATI VIPUL D ET AL: "Carrageenan: A natural seaweed polysaccharide and its applications", CARBOHYDRATE POLYMERS, APPLIED SCIENCE PUBLISHERS, LTD. BARKING, GB, vol. 105, 30 January 2014 (2014-01-30), pages 97-112, XP028843800, ISSN: 0144-8617, DOI: 10.1016/J.CARBPOL.2014.01.067 * tables 2-3 * | 1-13 | TECHNICAL FIELDS SEARCHED (IPC) |
| A | US 2015/201635 A1 (GRAF ERIC EDWARD [US] ET AL) 23 July 2015 (2015-07-23) * paragraphs [0006], [0017], [0043], [0133], [0181] - [0204]; claims 1-22 * | 1-13 | |
| A,D | US 2018/271119 A1 (CAGNAC OLIVIER [FR]) 27 September 2018 (2018-09-27) * the whole document * | 1-13 | |

-/--

The present search report has been drawn up for all claims

| Place of search | Date of completion of the search | Examiner |
|---|---|---|
| The Hague | 12 July 2019 | De Jong, Ellen |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

Europäisches
Patentamt

European
Patent Office

Office européen
des brevets

**EUROPEAN SEARCH REPORT**

Application Number

EP 19 15 6444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LONE JESPERSEN ET AL: "Heat and light stability of three natural blue colorants for use in confectionery and beverages", EUROPEAN FOOD RESEARCH AND TECHNOLOGY, SPRINGER BERLIN HEIDELBERG, vol. 220, no. 3-4, 1 March 2005 (2005-03-01), pages 261-266, XP019328053, ISSN: 1438-2385, DOI: 10.1007/S00217-004-1062-7 * abstract * | 1-13 | |
| A | SONDA BENELHADJ ET AL: "Effect of pH on the functional properties of Arthrospira (Spirulina) platensis protein isolate", FOOD CHEMISTRY, vol. 194, 31 August 2015 (2015-08-31), pages 1056-1063, XP055604610, NL ISSN: 0308-8146, DOI: 10.1016/j.foodchem.2015.08.133 * abstract; figure 3 * | 1-13 | |

TECHNICAL FIELDS
SEARCHED    (IPC)

The present search report has been drawn up for all claims

| Place of search | Date of completion of the search | Examiner |
|---|---|---|
| The Hague | 12 July 2019 | De Jong, Ellen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 6444

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2019

| Patent document cited in search report | Publication date | Patent family member(s) | Publication date |
|---|---|---|---|
| WO 2018134390 A1 | 26-07-2018 | NONE | |
| US 2011070336 A1 | 24-03-2011 | BR PI0811025 A2 | 07-04-2015 |
| | | CA 2685007 A1 | 30-10-2008 |
| | | CN 101677623 A | 24-03-2010 |
| | | CO 6241081 A2 | 20-01-2011 |
| | | EP 2139351 A1 | 06-01-2010 |
| | | US 2008260908 A1 | 23-10-2008 |
| | | US 2011070336 A1 | 24-03-2011 |
| | | WO 2008131061 A1 | 30-10-2008 |
| US 2015201635 A1 | 23-07-2015 | AR 092817 A1 | 06-05-2015 |
| | | CA 2869611 A1 | 10-10-2013 |
| | | EP 2833724 A2 | 11-02-2015 |
| | | MX 355069 B | 04-04-2018 |
| | | TW 201345429 A | 16-11-2013 |
| | | US 2015201635 A1 | 23-07-2015 |
| | | WO 2013150468 A2 | 10-10-2013 |
| US 2018271119 A1 | 27-09-2018 | BR 112018005928 A2 | 11-12-2018 |
| | | CA 2998973 A1 | 30-03-2017 |
| | | CN 108431202 A | 21-08-2018 |
| | | EP 3353282 A1 | 01-08-2018 |
| | | EP 3353283 A1 | 01-08-2018 |
| | | FR 3041505 A1 | 31-03-2017 |
| | | FR 3041653 A1 | 31-03-2017 |
| | | JP 2018527940 A | 27-09-2018 |
| | | JP 2018529343 A | 11-10-2018 |
| | | US 2018271119 A1 | 27-09-2018 |
| | | US 2018274002 A1 | 27-09-2018 |
| | | WO 2017050917 A1 | 30-03-2017 |
| | | WO 2017050918 A1 | 30-03-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018271119 A

### Non-patent literature cited in the description

- 17 - Natural Solutions for Blue Colors in Food. **BUCH-WEITZ, M.** Handbook on Natural Pigments in Food and Beverages. Woodhead Publishing, 2016, 355-384
- **DEWI, E. N. et al.** Physical characteristics of phyco-cyanin from Spirulina microcapsules using different coating materials with freeze drying method. *IOP Conf. Ser.: Earth Environ. Sci.,* 2017, 55
- **SELIG, M.J. et al.** Protection of blue color in a spirulina derived phycocyanin extract from proteolytic and thermal degradation via complexation with beet-pectin. *Food Hydrocolloids,* 2017
- **YOSHIKAWA, N. ; BELAY, A.** Single-Laboratory Validation of a Method for the Determination of c-Phycocyanin and Allophycocyanin in Spirulina (Arthrospira) Supplements and Raw Materials by Spectrophotometry. *Journal of AOAC International,* 2008, vol. 91, 524-529